# EUROPÄISCHE PATENTSCHRIFT

(11) **EP 3 485 080 B1**
(45) Veröffentlichungstag und Bekanntmachung des Hinweises auf die Patenterteilung: **18.10.2023**
(21) Anmeldenummer: 17739245.3
(22) Anmeldetag: 11.07.2017
(51) Int. Cl.: D06F 34/18, G01N 21/94, D06F 103/02, D06F 105/42, D06F 105/52, D06F 105/58, D06H 3/08, D06F 34/05, D06F 33/32, D06F 103/64, D06F 105/10

(54) **VERFAHREN UND VORRICHTUNG ZUR ERMITTLUNG EINER REINIGUNGSSTRATEGIE**
METHOD AND APPARATUS FOR DETERMINING A CLEANING STRATEGY
PROCÉDÉ ET DISPOSITIF PERMETTANT DE DÉTERMINER UNE STRATÉGIE DE NETTOYAGE

(30) Priorität: 15.07.2016 DE 102016212976; 12.06.2017 DE 102017209863
(43) Veröffentlichungstag der Anmeldung: 22.05.2019
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); WAWER, Georg, 1040 Wien (AT); MÜLLER, Alexander, 40789 Monheim (DE)
(86) Internationale Anmeldenummer: PCT/EP2017/067340
(87) Internationale Veröffentlichungsnummer: WO 2018/011176

(56) Entgegenhaltungen:
- WO-A1-2004/053220
- CN-B- 102 720 034
- DE-A1- 19 855 503
- DE-U1- 20 105 840

## Beschreibung

### Gebiet der Erfindung

Die Erfindung betrifft ein Verfahren und eine Vorrichtung, mit welchen über ein Spektralbild resultierend von einer Verunreinigung auf einer Textilie mindestens eine Ausgangsgröße ermittelt wird, wobei die mindestens eine Ausgangsgröße mindestens ein Parameter einer Reinigungsstrategie der Textilie zur Entfernung der Verunreinigung von der Textilie umfasst.

### Hintergrund der Erfindung

Verunreinigungen auf einer Textilie, etwa Kleidungsstücke, Gardinen oder Bettzeug, sind oft schwierig zu identifizieren. Verunreinigungen können dabei nicht nur die Ästhetik der Textilien beeinflussen, sondern auch ein hygienisches Problem für den Benutzer der Textilie darstellen.

Viele Verunreinigungen sind zwar mit dem Auge leicht auszumachen, jedoch ist dem Benutzer der Textilie oft unklar, welche Zusammensetzung bzw. welchen Ursprung die Verunreinigung hat. In manchen Fällen ist dem Benutzer beispielsweise nicht bewusst, dass die Textilie bei einem Missgeschick gerade verunreinigt wird. Die Verunreinigung fällt dem Benutzer dann erst zu einem späteren Zeitpunkt auf, wobei sich die Ursache und die Zusammensetzung der Verunreinigung dem Benutzer verschließen. Verunreinigungen mit verschiedenen Zusammensetzungen können für das Auge auch eine sehr ähnliche Erscheinung bieten, beispielsweise können Blutflecken und Tomatenflecken insbesondere nach einem gewissen Zeitraum mit dem Auge nicht mehr zu unterscheiden sein.

Hierbei ist es wünschenswert für den Benutzer, einen Hinweis auf die Zusammensetzung der Verunreinigung zu erlangen. Insbesondere lassen sich damit hygienische Probleme mit den Textilien identifizieren oder ausschließen. Zudem ist es zumeist von Interesse, die Verunreinigung durch einen Reinigungsvorgang wieder zu entfernen. Solche Reinigungsvorgänge können durch Hinweise auf die Zusammensetzung der Verunreinigung erheblich erleichtert oder überhaupt erst ermöglicht werden.

Dokument WO 2004/053220 beschreibt ein Verfahren zum Bestimmen von Reinigungsparametern unter Verwendung von Messungen mit einem tragbaren spektroskopischen Gerät. Dokument DE 198 55 503 A1 beschreibt ein Verfahren zur Auswahl von Reinigungsparametern in einer Waschmaschine unter Verwendung einer elektronischen Entscheidungsvorrichtung. Dokument CN 102 720 034 B beschreibt ein Verfahren zur Auswahl von Reinigungsparametern durch Messung der textilen Eigenschaften vor Beginn eines Reinigungszyklus.

### Allgemeine Beschreibung einiger beispielhafter Ausführungsformen der Erfindung

Vor dem Hintergrund des dargestellten Stands der Technik ist es somit Aufgabe der Erfindung, die beschriebenen Probleme zumindest teilweise zu verringern oder zu vermeiden, das heißt Hinweise auf die Zusammensetzung von Verunreinigungen auf Textilien zur Verfügung zu stellen. Die vorgeschlagenen Verfahren und Vorrichtungen sollen insbesondere auch benutzerfreundlich im Haushalt verwendet werden können.

Gemäß einem ersten Aspekt der Erfindung wird ein Verfahren beschrieben, umfassend: Erhalten einer Intensitätsinformation repräsentativ für ein von einer Verunreinigung einer Textilie resultierendes Spektralbild; Ermitteln mindestens einer von der Zusammensetzung der Verunreinigung abhängigen Ausgangsgröße aus der Intensitätsinformation; und Ausgeben oder Auslösen eines Ausgebens der mindestens einen Ausgangsgröße, wobei die mindestens eine Ausgangsgröße mindestens einen Parameter einer Reinigungsstrategie der Textilie zur Entfernung der Verunreinigung von der Textilie umfasst;-Durchführen der Reinigungsstrategie über eine Reinigungsvorrichtung, wobei die Intensitätsinformation während einer Reinigung erhalten wird, wobei die Reinigung dynamisch durchgeführt wird indem die Reinigungsvorrichtung sich während der Reinigung an die ermittelte mindestens eine Ausgangsgröße anpasst.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern.

Durch Reflektion und Emission von Strahlung, beispielsweise elektromagnetischer Strahlung, von der Verunreinigung resultiert ein Spektralbild. Das resultierende Spektralbild, welches die Intensität und die Energieverteilung der resultierenden Strahlung umfasst, wird direkt durch die Zusammensetzung der Verunreinigung beeinflusst. Unter der Zusammensetzung der Verunreinigung der Textilie kann die chemische Zusammensetzung und damit die Art der Verunreinigung, der Verunreinigungsgrad bzw. die Verunreinigungsmenge und/oder die räumliche Ausdehnung bzw. Verteilung der Verunreinigung wie beispielsweise die Form und/oder Dicke der Verunreinigung verstanden werden.

Unter einer Verunreinigung wird insbesondere eine Ansammlung von Fremdstoff auf einem Material einer Textilie oder eine Verfärbung der Oberfläche der Textilie verstanden, insbesondere in Form eines Flecks, Schmutz oder Unsauberkeiten. Beispielsweise befinden sich auf der Oberfläche Partikel wie Staub, Spuren von Flüssigkeiten, Farbstoffe oder fettige Rückstände. Weiter können auch nicht fixierte Textilfarbstoffe in dem Material der Textilie eingebracht worden sein, wobei sich die nicht fixierten Textilfarbstoffe aus dem Material lösen können, beispielsweise bei einem Reinigungsvorgang wie einem Waschen. Unter einer Verunreinigung können auch solche herausgelösten Textilbestandteile wie Textilfarbstoffe verstanden werden.

Unter einer Textilie werden insbesondere Kleidungsstücke, Gardinen oder Bettzeug verstanden.

Kleidungsstücke und Bettzeug umfassen beispielsweise Hemden, T-Shirts, Kleider, Jacken, Pullover, Hosen, Decken, Abdeckungen und Bezüge. Die Textilien können verschiedene Materialien umfassen, beispielsweise Naturfasern, Chemiefasern oder auch weitere Materialien wie Leder.

Die gemäß dem ersten Aspekt erhaltene Intensitätsinformation ist repräsentativ für ein von einer Verunreinigung einer Textilie resultierendes Spektralbild. Dabei braucht die erhaltene Intensitätsinformation lediglich repräsentativ für zumindest einen Teil des Spektralbildes sein. Die Intensitätsinformation enthält insbesondere mindestens einen Wert repräsentativ für die Intensität des Spektralbildes innerhalb eines Energiebereichs. Mit einem Wert repräsentativ für die Intensität des Spektralbildes innerhalb eines Energiebereichs kann beispielsweise eine monochrome oder über einen Energiebereich integrierte Intensität erfasst werden. Mit einer Mehrzahl von Werten, welche jeweils repräsentativ für die Intensität in verschiedenen Energiebereichen sind, kann eine spektrale Intensitätsverteilung mit Energieauflösung erhalten werden. Eine solche Intensitätsinformation ist einer physikalischen Messung zugänglich.

Da die Zusammensetzung der Verunreinigung das resultierende Spektralbild beeinflusst, wird auch die erhaltene Intensitätsinformation durch die Zusammensetzung der Verunreinigung mitbestimmt. Somit kann aus der Intensitätsinformation eine Ausgangsgröße ermittelt werden, welche von der Zusammensetzung der Verunreinigung abhängig ist.

Bei der mindestens einen Ausgangsgröße kann es sich insbesondere um einen oder mehrere Werte handeln, welche repräsentativ für die chemische Zusammensetzung der Verunreinigung, für den Verunreinigungsgrad und/oder für die räumliche Verteilung der Verunreinigung sind. Beispielsweise umfasst die mindestens eine Ausgangsgröße mindestens einen Wert für das Vorkommen und/oder die Konzentration eines chemischen Elements oder einer chemischen Verbindung, die Menge der Verunreinigung, die Form der Verunreinigung, Dicke der Verunreinigung, Farbe der Verunreinigung und/oder die Flächenausdehnung der Verunreinigung. Die mindestens eine Ausgangsgröße kann ebenfalls durch eine Klassifizierung der Intensitätsinformation ermittelt werden.

Über die räumliche Verteilung bzw. die Form der Verunreinigung kann insbesondere ein weiterer Aufschluss über die Zusammensetzung der Verunreinigung erreicht werden. Die Intensitätsinformation kann insbesondere charakteristisch für die Viskosität, Kapillarität und/oder die Oberflächenspannung der Zusammensetzung der Verunreinigung sein. Insbesondere kann die Intensitätsinformation charakteristisch für das Alter der Verunreinigung sein. Beispielsweise erfordern frische oder ältere Verunreinigungen verschiedene Behandlungen.

Die Intensitätsinformation kann indikativ für eine oder mehrere Farben der Verunreinigung sein. Beispielsweise gibt die Intensitätsinformation eine mittlere Färbung, eine Farbverteilung und/oder ein Maß für die Homogenität der Farbverteilung an. Beispielsweise enthält die Intensitätsinformation Werte in einem Farbraum wie einem RGB-Farbraum und/oder einem L*a*b*-Farbraum. Insbesondere wird für die Ermittlung der Ausgangsgröße eine Farbreferenz genutzt, beispielsweise eine Farbkarte, welche mit der Intensitätsinformation aufgenommen wird. Die Ermittlung der Ausgangsgröße kann einen Weißabgleich umfassen, beispielsweise anhand einer Referenz wie einer Graukarte, welche mit der Intensitätsinformation aufgenommen wird. Die Ermittlung der Intensitätsinformation indikativ für die Farbe der Verunreinigung kann insbesondere Aspekte des in der WO2016/126470 A1 beschriebenen Verfahrens zur Farbbestimmung umfassen.

Insbesondere enthält die Intensitätsinformation ein Maß für den Glanz der Verunreinigung, welche beispielsweise über die Reflektion der Oberfläche der Verunreinigung, insbesondere über die diffuse Reflektion der Oberfläche charakterisiert wird. Beispielsweise umfasst die Intensitätsinformation eine Winkelabhängigkeit der Reflektivität der Oberfläche der Verunreinigung. Insbesondere umfasst die Intensitätsinformation ein Maß für den Glanz der Verunreinigung an mehreren Stellen der Oberfläche, insbesondere auch an sauberen und verunreinigten Stellen der Textilie.

Durch das Ausgeben oder das Auslösen eines Ausgebens der mindestens einen Ausgangsgröße kann somit dem Benutzer eine Information zur Zusammensetzung der Verunreinigung der Textilie bereitgestellt werden, welche vorteilhafterweise zur Identifikation der Verunreinigung beiträgt. Dem Benutzer können beispielsweise Informationen über die chemische Zusammensetzung bzw. über das Vorkommen einzelner Elemente oder Verbindungen zur Verfügung gestellt werden. Insbesondere durch eine Klassifizierung kann mit der mindestens einen Ausgangsgröße eine weitergehende Information bereitgestellt werden, beispielsweise ob die Verunreinigung Gehalte an bestimmten organischen oder anorganischen Komponenten enthält, etwa Farbstoffe oder Lipide, und ggf. welchen Ursprung die Verunreinigung hat. Beispielsweise kann die mindestens eine Ausgangsgröße dem Benutzer Informationen über eine mögliche hygienische Bedenklichkeit der Verunreinigung geben.

Das Verfahren gemäß dem ersten Aspekt bzw. die Vorrichtung gemäß dem zweiten Aspekt ermöglicht es somit insbesondere, dem Benutzer die Identifizierung der Zusammensetzung bzw. des Ursprungs der Verunreinigung zu erleichtern. Ist beispielsweise eine Verunreinigung mit dem Auge nicht zu identifizieren, kann über das Verfahren bzw. die Vorrichtung mindestens eine von der Zusammensetzung der Verunreinigung abhängige Ausgangsgröße ermittelt werden. Die Ausgangsgröße kann es dem Benutzer beispielsweise ermöglichen, zwischen verschiedenen Zusammensetzungen von Verunreinigungen, welche für das Auge gleiche Erscheinungsbilder bieten, zu unterscheiden.

Denkbar ist es, dass als Verunreinigung aus dem Material der Textilie gelöste Stoffe, beispielsweise nicht fixierte Textilfarbstoffe über die mindestens eine Ausgangsgröße erfasst werden. In einer Ausgestaltung des Verfahrens gemäß dem ersten Aspekt ist die Intensitätsinformation jedoch zumindest teilweise repräsentativ für ein von einer beleuchteten Oberfläche der Verunreinigung auf einer Textilie resultierendes Spektralbild.

Wird die Verunreinigung beleuchtet, etwa mit Strahlung wie elektromagnetischer Strahlung, resultiert durch Reflektion und Emission an bzw. von der Oberfläche der Verunreinigung ein Spektralbild. Die Beleuchtung der Verunreinigung kann insbesondere mittels des Strahlungsspektrums der Sonne umfassend natürliches Licht oder mittels eines künstlichen Strahlungsspektrums, beispielsweise des Spektrums eines thermischen oder nichtthermischen Strahlers wie Glühlampen, Leuchtstoffröhren oder LEDs bewirkt werden. Denkbar ist zudem eine Anregung über monochrome Strahlung.

Gewöhnlich soll die Verunreinigung durch einen Reinigungsvorgang wieder entfernt werden. Erfindungsgemäß umfasst die mindestens eine Ausgangsgröße mindestens einen Parameter einer Reinigungsstrategie der Textilie. Dem Benutzer kann somit eine Empfehlung über einen in Bezug auf die vorliegende Verunreinigung optimalen Reinigungsvorgang gegeben werden. Dem Benutzer können auch verschiedene gleichwertige Alternativen für mögliche Parameter einer Reinigungsstrategie zu Verfügung gestellt werden. Beispielsweise umfasst das Verfahren eine Bereitstellung einer Mehrzahl von Parametern einer Reinigungsstrategie, wobei der Benutzer insbesondere über eine Abfrage beispielsweise von Präferenzen eine Auswahl treffen kann. Beispielsweise kann der Benutzer auch die Ursache der Verunreinigung zur Auswahl mit angeben, beispielsweise ob es sich um eine Verunreinigung aus Lebensmitteln oder aufgrund einer Outdoor-Aktivität (wie Verunreinigungen auf Basis von Gras oder Schlamm) handelt. Dem Benutzer können hierbei auch mögliche Ursachen vorgeschlagen werden, wobei der Benutzer eine oder mehrere der Möglichkeiten auswählen kann.

Für eine Verunreinigung kann über die von der Zusammensetzung der Verunreinigung abhängige Intensitätsinformation ein Rückschluss auf Parameter der Reinigungsstrategie gezogen werden. Hierbei kann der mindestens eine Parameter der Reinigungsstrategie indirekt aus einer weiteren Ausgangsgröße bestimmt werden, beispielsweise wird zunächst eine für die Zusammensetzung der Verunreinigung repräsentative Ausgangsgröße bestimmt und aus dieser für die Zusammensetzung der Verunreinigung repräsentativen Ausgangsgröße mindestens ein Parameter der Reinigungsstrategie ermittelt. Auch kann mindestens ein Parameter direkt aus der Intensitätsinformation ermittelt werden, beispielsweise mittels einer Klassifizierung über hinterlegte Intensitätsinformationen und über den Klassen zugeordneten Reinigungsstrategien.

Insbesondere wenn ein Benutzer der Textilie die Verunreinigung nicht mit dem Auge identifizieren kann und es daher unklar ist, wie die Verunreinigung wieder zu entfernen ist, kann mit dem Verfahren gemäß dem ersten Aspekt bzw. der Vorrichtung gemäß dem zweiten Aspekt eine Empfehlung über eine optimale Reinigungsstrategie bereitgestellt werden. Beispielsweise kann es dem Benutzer unklar sein, ob eine Verunreinigung Lipide oder bestimmte Farbstoffe enthält, welche über gewöhnlicherweise angewandte Reinigungsstrategien nicht zuverlässig entfernt werden können. Über die von der Zusammensetzung der Verunreinigung abhängige, im Rahmen des Verfahrens ermittelte Reinigungsstrategie können mit der Identifikation entsprechender Inhaltsstoffe der Verunreinigung eine Empfehlung über eine auf die individuelle Zusammensetzung angepasste Reinigungsstrategie getroffen werden. Im Ergebnis kann die Entfernung der Verunreinigung stark vereinfacht und deutlich zuverlässiger gestaltet werden.

Denkbar ist es ebenfalls, dass als Verunreinigung aus dem Material der Textilie gelöste Stoffe, beispielsweise nicht fixierte Textilfarbstoffe über die mindestens eine Ausgangsgröße erfasst werden. Dies geschieht insbesondere während der Durchführung einer Reinigungsstrategie, so dass dem Benutzer damit ein Rückschluss auf die Effektivität der Reinigungsstrategie gegeben wird. Beispielsweise kann der Benutzer erkennen, ob sich eine zu große Menge von Textilfarbstoffen aus dem Material der Textilie löst, womit der Benutzer eine Anregung erhält, die Reinigungsstrategie zu verändern und ggf. im Hinblick auf den Textilfarbstoff schonender zu gestalten. Ebenso kann eine Entfärbung einer Textilie beabsichtigt sein und über die mindestens eine Ausgangsgröße ein Rückschluss auf den Grad der Entfärbung durch eine Reinigungsstrategie gezogen werden.

Insbesondere repräsentiert der mindestens eine Parameter der Reinigungsstrategie eine Reinigungsmittelart, eine Reinigungsmittelmenge, eine Reinigungstemperatur, einen Reinigungsvorrichtungstyp, Einstellungen einer Reinigungsvorrichtung oder Kombinationen hiervon.

Reinigungsmittel werden beispielsweise im Haushalt für die Reinigung unterschiedlicher Objekte eingesetzt. Beispielsweise wird für Waschmaschinen ein Reinigungsmittel, zum Beispiel ein Waschmittel, für die Reinigung von Textilien eingesetzt. Unter einem Reinigungsmittel sollen jedoch ebenfalls auch Reinigungshilfsmittel oder Reinigungszusatzmittel, wie beispielsweise ein Bleichzusatzmittel, ein Weichspüler oder Wäschestärke, verstanden werden. Ein Reinigungsmittel kann zudem eine Flüssigkeit, ein disperses System, zum Beispiel ein Gel oder Schaum, oder ein Feststoff, insbesondere ein Tab, Pulver oder Granulat, sein.

Ein Reinigungsmittel kann beispielsweise eine oder mehrere Komponenten aus der Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine aufweisen.

Ein Reinigungsmittel kann ferner einen oder mehrere weitere Bestandteile umfassen. Diese Bestandteile schließen ein, sind aber nicht beschränkt auf die Gruppe bestehend aus Bleichaktivatoren, Komplexbildnern, Gerüststoffen, Elektrolyten, nichtwässrigen Lösungsmitteln, pH-Stellmitteln, Parfümträgern, Fluoreszenzmitteln, Hydrotropen, Silikonölen, Bentoniten, Antiredepositionsmitteln, Einlaufverhinderern, Knitterschutzmitteln, Farbübertragungsinhibitoren, , antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- oder Imprägniermitteln, Quell- oder Schiebefestmitteln und/oder UV-Absorbern.

Der mindestens eine Parameter der Reinigungsstrategie kann die Reinigungsmittelart repräsentieren und somit indikativ für die Zusammensetzung des Reinigungsmittels sein. Wenn beispielsweise ein gewisser Anteil Farbstoffe in der Zusammensetzung der Verunreinigung enthalten sind, kann dem Benutzer die Verwendung von bestimmten Bleichzusatzmitteln empfohlen werden. Sind beispielsweise gewisse Gehalte an Lipiden in der Zusammensetzung der Verunreinigung vorhanden, kann die Verwendung von spezifischen Tensiden und/oder Lipasen in der empfohlenen Reinigungsstrategie enthalten sein.

Der mindestens eine Parameter kann die Reinigungsmittelmenge repräsentieren und insbesondere eine absolute Menge des Reinigungsmittels angeben. Ebenso kann eine relative Menge des Reinigungsmittels mittels des mindestens einen Parameters angezeigt werden, beispielsweise bezogen auf die Masse der zu reinigenden Textilien bzw. ein Flottenverhältnis oder eine Reinigungsmittelmenge bezogen auf ein zur Reinigung einzusetzendes Wasservolumen. Über die von der Zusammensetzung der Verunreinigung abhängige Intensitätsinformation kann somit eine Reinigungsmittelart und/oder eine Reinigungsmittelmenge ermittelt werden, welche eine optimale Entfernung der Verunreinigung gewährleistet.

Mit einem für die Reinigungstemperatur repräsentativen Parameter kann eine für die bestimmte Zusammensetzung der Verunreinigung optimale Temperatur zur Entfernung der Verunreinigung angeben werden, insbesondere in Kombination mit einer Reinigungsmittelart. Die Reinigungstemperatur kann hierbei einerseits hoch genug sein, um eine möglichst vollständige Entfernung der Verunreinigung zu gewährleisten und anderseits im Hinblick auf den Energieaufwand und eine Schonung der Textilie niedrig gehalten werden.

Als Behandlung der Textilie kann beispielsweise vorgesehen sein, dass die Textilie in Hinsicht auf die Verunreinigung gefärbt wird oder einer Schonungsbehandlung unterzogen wird. Beispielsweise kann auf Grundlage der Intensitätsinformation eine Färbungsempfehlung ermittelt werden, wobei die Textilie gemäß der Reinigungsstrategie durch eine Färbung eine Auffrischung oder eine Veränderung der Farbgebung erhält.

Ebenso kann der Parameter der Reinigungsstrategie indikativ für eine Endbehandlung der Textilie sein. Beispielsweise zeigt der mindestens eine Parameter die Temperatur und/oder ein Programm für ein Bügeln und/oder Trocknen der Textilie an, beispielsweise für eine Bügelvorrichtung und/oder einen Trockner.

Unter einer Reinigungsvorrichtung wird insbesondere eine Waschmaschine, insbesondere automatische Haushaltswaschmaschine verstanden.

Die Wachmaschine kann in verschiedenen Ausgestaltungsformen vorliegen. Man unterscheidet Toplader, bei denen die Ladeluke an der Oberseite liegt, und Frontlader, bei denen ein Bullauge als Ladeluke an der Vorderseite dient. Vorteil des Topladers ist, dass die Abdichtung der Tür einfacher ausgeführt und die Trommel auf zwei Seiten durch Wälzlager abgestützt sein kann, ein Toplader lässt sich auch in sehr engen Räumen aufstellen, wo nicht genügend Platz zum Öffnen einer vorderen Tür zur Verfügung steht. Ein Frontlader hingegen bietet auf der Oberseite Platz für z. B. einen Wäschetrockner oder für eine Arbeitsfläche und wird deswegen gelegentlich anstelle eines Unterschranks in eine Küchenzeile eingebaut.

Die amerikanischen Toplader haben immer eine rotierende Trommel und Mischelemente (Agitator oder Discs), wobei sich die Mischelemente mit oder gegen die Trommeldrehrichtung bewegen können. Die Maschinen können eine Laugenumwälzung und Sprühvorrichtungen für die Lauge aufweisen. Grundsätzlich werden Deep Fill und HE-Toploader unterschieden. Deep Fill Toplader arbeiten mit vorgegebenen Wasserniveaus, haben also keine Beladungserkennung. HE Maschinen verfügen in der Regel über eine Beladungserkennung und steuern danach die Wassermengen. In der Regel haben die Maschinen keine eingebaute Heizung, sondern werden an Kalt- und Warmwasser angeschlossen.

Im Rahmen der vorliegenden Erfindung kann ein Parameter der Reinigungsstrategie einen bestimmten Typ einer solchen Reinigungsvorrichtung angeben. Denkbar ist auch, dass der Parameter zumindest teilweise manuell durchzuführende Reinigungsstrategien vorgibt, etwa eine Handwäsche. Auch kann der mindestens eine Parameter Einstellungen einer Reinigungsvorrichtung umfassen, beispielsweise ein Programm einer automatischen Haushaltswaschmaschine oder eine Sequenz solcher Programme.

Im Ergebnis kann mit dem mindestens einem Parameter der Reinigungsstrategie dem Benutzer die Entfernung der Verunreinigung erheblich erleichtert werden. Insbesondere bei Verunreinigungen, welche mit dem Auge nicht zu identifizieren sind, kann über das Verfahren eine im Hinblick auf die Reinigung, aber auch auf den Energieverbrauch und die Schonung des Materials der Textilie optimale Reinigungsstrategie empfohlen werden. Beispielsweise umfasst die Empfehlung der Reinigungsmittelart und der Einstellungen der Reinigungsvorrichtung, ob die Intensitätsinformation einen gewissen Gehalt an Lipiden in der Verunreinigung anzeigt und daher entsprechende fettlösende Bestandteile im Reinigungsmittel enthalten sein sollen oder ob bestimmte Farbstoffe in der Verunreinigung vorhanden sind, welche über eine spezifische Reinigungsmittelart und Einstellungen der Reinigungsvorrichtung gezielt angegriffen werden können.

Der mindestens eine Parameter kann eine Empfehlung über eine Vorbehandlung der Textilie umfassen. Eine solche Vorbehandlung umfasst beispielsweise eine manuelle oder automatische Aufbringung eines Reinigungsmittels auf die Verunreinigung, insbesondere mit einer vorgegebenen Einwirkzeit, deren Dauer ebenfalls als Parameter der Reinigungsstrategie dienen kann. Anschließend kann die Textilie in einer Reinigungsvorrichtung, beispielsweise einer automatischen Haushaltswaschmaschine gereinigt werden.

Das Verfahren umfasst weiterhin das Durchführen der Reinigungsstrategie über eine Reinigungsvorrichtung.

Hierbei wird die Intensitätsinformation während einer Reinigung erhalten.

Bei einem Erhalten der Intensitätsinformation während der Reinigung wird die Reinigung dynamisch durchgeführt, d.h. eine Reinigungsvorrichtung kann sich während der Reinigung an die gerade ermittelte mindestens eine Ausgangsgröße anpassen, insbesondere indem die Ausgangsgröße kontinuierlich ermittelt wird. Beispielsweise passt eine Waschmaschine während des Waschprogramms beispielsweise die Temperatur oder die Reinigungsmittelmenge entsprechend der ermittelten Ausgangsgröße an. Hierbei kann insbesondere die Intensitätsinformation von aus der Textilie gelösten Textilbestandteilen wie Textilfarbstoffen erhalten werden.

Mit einem Erhalten der Intensitätsinformation nach einer Reinigung kann beispielsweise das Ergebnis bzw. die Effektivität einer Reinigungsstrategie festgehalten und überprüft werden.

Die mindestens eine Ausgangsgröße kann dem Benutzer auf einer Anzeige ausgegeben werden bzw. eine entsprechende Ausgabe kann ausgelöst werden. Der Benutzer kann dann die Reinigungsstrategie durchführen. Alternativ oder zusätzlich hierzu kann in einer Ausgestaltung des Verfahrens die mindestens eine Ausgangsgröße an eine Reinigungsvorrichtung ausgegeben werden. Beispielsweise kann die mindestens eine Ausgangsgröße mindestens einen Parameter einer Reinigungsstrategie repräsentieren, welcher an die Reinigungsvorrichtung ausgegeben wird, so dass die Reinigungsvorrichtung beispielsweise die entsprechende Reinigungsstrategie als Voreinstellung übernimmt und der Benutzer die Reinigungsvorrichtung lediglich starten muss. Ebenso ist es denkbar, dass die Reinigungsvorrichtung mit der Ausgabe der mindestens einen Ausgangsgröße die Reinigungsstrategie automatisch durchführt. Die Reinigungsvorrichtung kann beispielsweise über eine Dosierungsvorrichtung für Reinigungsmittel verfügen, um die Reinigungsmittelart und Reinigungsmittelmenge entsprechend der empfohlenen Reinigungsstrategie automatisch bereitzustellen. Im Ergebnis wird hiermit die Benutzerfreundlichkeit des Verfahrens verbessert.

In einer Ausgestaltung des Verfahrens umfasst die Ermittlung der mindestens einen Ausgangsgröße einen Vergleich der Intensitätsinformation mit Vergleichswerten. Entsprechende Vergleichswerte können in einer Datenbank hinterlegt sein. Die Intensitätsinformation kann einer Klassifizierung unterzogen werden, wobei die mindestens eine Ausgangsgröße durch ein Ergebnis der Klassifizierung erhalten oder beeinflusst wird. Insbesondere wird die Intensitätsinformation einer Clusterkennung unterzogen. Eine Klassifizierung kann beispielsweise auf einem Vergleich der Intensitätsinformation mit einer Datenbank von bereits bekannten Intensitätsinformationen beruhen.

Die Vergleichswerte bzw. eine hierfür vorgesehene Datenbank kann insbesondere Intensitätsinformationen von typischen, in den Anwendungsgebieten der Textilien auftretenden Verunreinigungen enthalten. Beispielsweise kann im Haushaltsbereich auf Intensitätsinformationen von typischen Verunreinigungen wie verschiedenen Nahrungsmittelresten, Spuren von Getränken, Gras oder Farben zurückgegriffen werden. Insbesondere sind Vergleichswerte für Verunreinigungen mit verschiedenen Altern wie frischen oder eingetrockneten Verunreinigungen interessant. Die Vergleichswerte können mindestens einen Wert für die Intensität in einem bestimmten Energiebereich eines Spektralbilds und/oder kontinuierliche Werte für mindestens ein Energieintervall eines Spektralbilds umfassen. Weiter können den entsprechenden Vergleichswerten bestimmte Ausgangsgrößen zugeordnet sein, beispielsweise mindestens ein Parameter einer Reinigungsstrategie zur Entfernung der Verunreinigung.

Die Ermittlung der Ausgangsgröße kann einen oder mehrere Schritte einer Merkmalsextraktion und/oder eines Merkmalsabgleichs aus der Intensitätsinformation umfassen. Beispielsweise werden Methoden herangezogen, welche denen der Auswertung von biometrischen Fotos entsprechen.

In einer Ausgestaltung des Verfahrens umfasst das Verfahren weiterhin das Ermitteln der Intensitätsinformation insbesondere über einen optischen Sensor. Unter einem optischen Sensor werden hierbei Sensoren verstanden, welche eine Intensität einfallender Strahlung, insbesondere elektromagnetischer Strahlung im sichtbaren Bereich und darüber hinaus, ermitteln können. Insbesondere ist der optische Sensor dafür eingerichtet, eine Energieauflösung und/oder räumliche Auflösung der Intensitätsinformation bereitzustellen. Der optische Sensor kann einen Bildsensor umfassen, insbesondere einen digitalen Bildsensor. Zur Ermittlung der Intensität der Strahlung kann insbesondere mindestens ein Halbleiterelement, Dioden, CCD-Elemente, beispielsweise ein Bayer-Sensor, oder CMOS-Elemente, beispielsweise ein Sensor des Typs Foveon X3, verwendet werden. Der optische Sensor kann optische Filter und insbesondere ein Spektrometer enthalten. Es können weitere optische Elemente wie Linsen und/oder Filter, beispielsweise ein externer Monochromator vorgesehen sein.

Gemäß einer Ausgestaltung ist die Intensitätsinformation repräsentativ für spektrale Anteile eines Spektralbilds. Die spektralen Anteile können innerhalb des sichtbaren Bereichs liegen. Ist gemäß einer weiteren Ausgestaltung des Verfahrens die Intensitätsinformation repräsentativ für spektrale Anteile eines Spektralbilds, wobei mindestens einer der spektralen Anteile außerhalb des sichtbaren Energiebereichs liegt, kann die Zusammensetzung der Verunreinigung mit erhöhter Genauigkeit ermittelt werden. Dadurch, dass nicht sichtbare spektrale Anteile berücksichtigt werden, können auch verschiedene Verunreinigungen identifiziert werden, obwohl diese für das Auge nicht zu unterscheiden sind. Zur Ermittlung von spektralen Anteilen des Spektralbilds kann insbesondere ein Abgleich mit einem Empfindlichkeitsspektrums des optischen Sensors erfolgen, beispielsweise anhand von vorgegebenen Einstellungen oder durch Abgleich mit einer Referenz.

Insbesondere ist die Intensitätsinformation repräsentativ für spektrale Anteile eines Spektralbilds im ultravioletten Energiebereich. Ebenfalls können spektrale Anteile im infraroten Energiebereich berücksichtigt werden. Die Intensitätsinformation ist insbesondere repräsentativ für spektrale Anteile eines Spektralbilds vom infraroten Energiebereich bis zum ultravioletten Energiebereich, beispielsweise zumindest für spektrale Anteile eines Spektralbilds mit Wellenlängen von 1400 nm bis 315 nm, bevorzugt für Wellenlängen von 3000 nm bis 280 nm, weiter bevorzugt für Wellenlängen von 5000 nm bis 200 nm. Die Intensitätsinformation ist insbesondere repräsentativ für spektrale Anteile eines Spektralbilds im (nahen) infraroten Energiebereich, beispielsweise für Wellenlängen von 700 nm bis 2400 nm, insbesondere 780 nm bis 2000 nm, insbesondere bis 1450 nm.

Denkbar ist ebenfalls die Verwendung von monochromen Sensoren ohne Farbauflösung. Ebenso können Sensoren verwendet werden, welche auf bestimmte Wellenlängenbereiche beschränkt sind. Beispielsweise kann der optische Sensor auf mindestens einer Fotodiode und/oder mindestens einem LED-Element basieren. Einzelne Elemente oder Felder von Elementen, beispielsweise Fotodioden oder lichtempfindliche Bauteilen wie LEDs können verwendet werden. Es kann vorteilhaft sein, die Größe der einzelnen Sensorelemente, beispielsweise der einzelnen Fotodioden im Hinblick auf Dynamik, Auflösung und/oder Empfindlichkeit zu optimieren.

In einer Ausgestaltung des Verfahrens umfasst das Verfahren weiterhin: Durchführen einer Referenzierung der Ermittlung der Intensitätsinformation. Beispielsweise kann zur Ermittlung von spektralen Anteilen des Spektralbilds insbesondere ein Abgleich mit einem Empfindlichkeitsspektrum erfolgen, beispielsweise anhand von vorgegebenen Einstellungen oder durch Abgleich mit einer Referenz. Die Referenz kann insbesondere als Karte ausgestaltet sein, beispielsweise in Form einer Farbkarte, Graukarte und/oder eines Größenmaßstabs, welche auf oder neben die Verunreinigung gelegt werden können. Ebenso kann eine Referenz in und/oder an einer Reinigungsvorrichtung angebracht sein. Beispielsweise ist eine Oberfläche im Inneren der Reinigungsvorrichtung, etwa der Oberfläche eines Reinigungsbehälters, mit einer Referenz versehen. Die Referenz kann auch Teil einer Umverpackung eines Mittels zur Durchführung eines Wasch-, Reinigungs-, Pflege- oder Färbevorgangs sein z.B. in Form eines Aufdrucks, eines ablösbaren Teils der Verpackung oder als digitale Information z.B. in Form eines elektronischen Labels. Ebenso kann eine Referenzierung über die Textilie vorgenommen werden. Beispielsweise ist die Intensitätsinformation indikativ sowohl für die Verunreinigung als auch für die Textilie, d.h. für verunreinigte und saubere Stellen der Textilie. Über einen Abgleich, beispielsweise eine Differenzbildung zwischen der Intensitätsinformation zur Verunreinigung und zur sauberen Textilie kann die Zusammensetzung der Verunreinigung weiter bestimmt werden.

Weiter kann eine Strahlungsquelle, beispielsweise eine Lichtquelle wie ein Beleuchtungsmittel und/oder ein Blitzlicht bereitgestellt werden, welche insbesondere auf den optischen Sensor abgestimmt ist und zur Beleuchtung der Oberfläche der Verunreinigung dient. Eine solche Strahlungsquelle kann mit dem optischen Sensor in einer Baueinheit kombiniert sein.

Umfasst das Verfahren ein Beaufschlagen der Verunreinigung mit Strahlung, beispielsweise ein Beleuchten der Verunreinigung, kann einer Ermittlung der Intensitätsinformation eine definierte Anregung zugrunde gelegt werden. Beispielsweise wird die Verunreinigung über eine Lichtquelle mit Strahlung beaufschlagt bzw. beleuchtet, wobei die verwendete Strahlung eine bestimmte Intensität und/oder bestimmte spektrale Verteilung aufweist. Durch ein solches Beleuchten zumindest eines Teils der Verunreinigung wird erreicht, dass unabhängig von den äußeren Bedingungen eine ausreichende Beleuchtung sichergestellt wird. Dadurch kann ein Ermitteln der Intensitätsinformation auch bei schlechten äußeren Bedingungen, wie wenig Tageslicht in einem dunklen Raum, ermöglicht werden oder jedenfalls die Qualität der Ermittlung verbessert werden.

Unter einem Beleuchten wird verstanden, dass eine Lichterzeugung mit Hilfe einer künstlichen Lichtquelle erfolgt, sodass insbesondere eine (bessere) Sichtbarmachung der Verunreinigung der Textilie erfolgen kann. Die Beleuchtung erfolgt insbesondere durch Strahlung, welche zumindest teilweise im sichtbaren Bereich des elektromagnetischen Spektrums liegt, beispielsweise mit einer Strahlung dessen Wellenlänge zumindest einen Teil des Wellenlängenbereichs von 380 nm bis 780 nm abdeckt. Ebenso kann die Anregung Anteile im (nahen) Infrarotbereich und/oder im ultravioletten Energiebereich umfassen.

Beispielsweise werden LEDs für eine Beleuchtung verwendet. LEDs können hierbei einen wohldefinierten Frequenzbereich abdecken. LEDs mit verschiedenen Farbtemperaturen können einzeln oder kombiniert eingesetzt werden, beispielsweise mit roten, grünen, blauen und/oder weißen LEDs.

Der Wellenlängenbereich kann weiter spezifisch auf die Ermittlung der Intensitätsinformation abgestimmt sein. Beispielsweise wird ein optischer Sensor umfassend ein CMOS-Element verwendet, welche im nahen Infrarotbereich (NIR) ein Empfindlichkeitsmaximum hat. Hierbei ist eine Beleuchtung mit Strahlung im NIR-Bereich vorteilhaft. Unter dem NIR-Bereich wird ein Wellenlängenbereich des elektromagnetischen Spektrums von mindestens 650 nm, insbesondere bis maximal 2000 nm, insbesondere von mindestens 750 nm bis maximal 1400 nm verstanden.

Die Dauer der Anregung kann dabei variiert werden. Insbesondere kann die Zeitdauer relativ kurz sein, d.h. unterhalb einer Sekunde, wobei beispielsweise ein Blitzlicht verwendet wird. Die Dauer der Anregung kann weiter kleiner als 0,1 Sekunden, insbesondere kleiner als 0,01 Sekunden betragen. Eine kurze Anregung bzw. ein Blitzlicht kann alleine verwendet oder auch mit einem weiteren Beleuchtungsmittel kombiniert werden. Beispielsweise wird ein Blitzlicht in Kombination mit einem kontinuierlich arbeitenden Beleuchtungsmittel verwendet, wobei Blitzlicht und Beleuchtungsmittel in einer kombinierten Beleuchtungseinheit zusammengefasst sind. Ebenso ist es möglich, die Lichtstärke zeitlich zu modulieren.

Beleuchtungsmittel und optischer Sensor können auch zumindest teilweise die gleichen Elemente verwenden, was insbesondere bei der Verwendung von LEDs deutliche Kostenvorteile in der Herstellung der Vorrichtung ermöglicht. Wenn Beleuchtungsmittel und optischer Sensor über zumindest teilweise gleiche Elemente gegeben sind, ist auch eine Abstimmung von Anregung und Detektion auf bestimmte Wellenlängenbereiche erleichtert. Beispielsweise können LEDs sowohl Licht emittieren wie auch detektieren. Die Verunreinigung kann zwischen ein Beleuchtungsmittel umfassend mindestens eine Sender-LED und einen optischen Sensor umfassend mindestens eine Empfänger-LED gebracht werden. Sind Sender-LED und Empfänger-LED baugleich, kann eine Transmission bzw. Abschwächung der Strahlung durch die Verunreinigung auf besonders einfache und direkte Weise ermittelt werden. Ebenso kann eine Anordnung von Sender-LED und Empfänger-LED in einer Reflektions- bzw. Emissionsmessung vorgesehen sein.

In einer Ausgestaltung wird eine Intensitätsinformation mit einer dreidimensionalen räumlichen Auflösung erhalten. Mit einer dreidimensionalen räumlichen Auflösung kann die Genauigkeit der Bestimmung der Verunreinigung weiter erhöht werden. Denkbar ist die Verwendung von mehreren Aufnahmen aus verschiedenen Perspektiven über den gleichen optischen Sensor bzw. die gleiche Sensoranordnung. Ebenso können speziell für eine dreidimensionale Auflösung ausgebildete optische Elemente wie Aufsatzlinsen oder Objektive vorgesehen sein oder eine 3D-Kamera verwendet werden. Zusätzliche optische Elemente, beispielsweise Aufsatzlinsen oder Objektive, können auch auf herkömmlichen, im Wesentlichen zweidimensionalen optischen Sensoren, beispielsweise digitale Kameras oder in mobilen Geräten integrierten Kameras angeordnet werden. Damit können auch bereits vorhandene Vorrichtungen für eine dreidimensionale Auflösung nachgerüstet werden (Retrofitting). Mit der dreidimensionalen Auflösung kann die räumliche Ausdehnung der Verunreinigung eingehender bestimmt werden und somit in Hinsicht auf die Zusammensetzung der Verunreinigung eine umfassendere und genauere Intensitätsinformation erhalten werden.

Insbesondere umfasst die Intensitätsinformation einen oder mehrere Parameter einer Größeninformation, beispielsweise einer räumlichen Ausdehnung bzw. des Volumens der Verunreinigung. Insbesondere kann auch die Dicke der Verunreinigung bestimmt werden. Insbesondere wird die Größeninformation in Verbindung mit einer Referenz wie einem Größenmaßstab bestimmt.

Insbesondere umfasst die Intensitätsinformation ein Maß für die Rauigkeit der Oberfläche der Verunreinigung, beispielsweise in Verbindung mit einer dreidimensionalen räumlichen Auflösung. Das Maß für die Rauigkeit kann beispielsweise die mittlere Rauheit R_{A}, die mittlere Rautiefe Rz und/oder die maximale Rautiefe Rₘₐₓ umfassen.

Zur Ermittlung der Intensitätsinformation insbesondere über mindestens ein optisches Sensorelement können auch eine oder mehrere Referenzen verwendet werden. Die Referenzen können vor, nach und/oder gleichzeitig mit der Intensitätsinformation über den Sensor erfasst werden. Beispielsweise wird eine Kalibrierungskarte verwendet, welche Farbreferenzen und/oder Größenreferenzen umfasst. Über eine Erfassung der Kalibrierungskarte kann somit beispielsweise die Intensitätsinformation hinsichtlich der Farbe und der Abmessungen, insbesondere bei einer dreidimensionalen räumlichen Auflösung, genauer bestimmt werden.

In einer besonders einfachen Ausgestaltung umfasst das mindestens eine optische Sensorelement mindestens ein kameraartiges Element und stellt eine Bildinformation bereit. Entsprechend können digitale Kameras oder in mobilen Geräten integrierte Kameras für das Verfahren herangezogen werden bzw. als mindestens eine Vorrichtung zur Durchführung des Verfahrens dienen. Dabei können Aufsätze für eine dreidimensionale räumliche Auflösung an dem kameraartigen Element verwendet werden.

In einer Ausgestaltung umfasst die Bildinformation mindestens zwei Einzelbilder der Verunreinigung. Die Einzelbilder können hierbei eine zeitliche Abfolge darstellen, beispielsweise eine oder mehrere Filmsequenzen, oder auch eine Variation der Position und Perspektive des kameraartigen Elements wiedergeben. Hierdurch kann die Genauigkeit der Intensitätsinformation weiter erhöht werden. Insbesondere kann, wie oben bereits beschrieben, über eine Mehrzahl von Einzelbildern eine dreidimensionale räumliche Auflösung erreicht werden. Ebenso kann die Verunreinigung von verschiedenen Seiten erfasst werden, beispielsweise von der Vorderseite, Rückseite, Außenseite und/oder Innenseite.

In einer weiteren Ausgestaltung des Verfahrens umfasst das Verfahren weiterhin: Bestimmen eines Verunreinigungsprofils zumindest teilweise basierend auf der Ausgangsgröße, insbesondere basierend auf einer Mehrzahl von ermittelten Ausgangsgrößen, wobei die Ermittlung der mindestens einen Ausgangsgröße zumindest teilweise auf dem Verunreinigungsprofil basiert.

Über die mindestens eine Ausgangsgröße kann somit ein Verunreinigungsprofil erstellt werden, welches an die jeweilige Zusammensetzung der Verunreinigung angepasst wird. Insbesondere kann eine Mehrzahl von Ausgangsgrößen im Sinne einer Historie von ermittelten Ausgangsgrößen in ein Verunreinigungsprofil einfließen, so dass zukünftige Ermittlungen zumindest teilweise auf dem Verunreinigungsprofil basieren können. Damit kann die Ermittlung der mindestens einen Ausgangsgröße adaptiv gestaltet werden und sich über das Verunreinigungsprofil den jeweiligen Anforderungen genauer anpassen. Die Ermittlung der Ausgangsgröße kann insbesondere im Hinblick auf die Abhängigkeit von der chemischen Zusammensetzung der Verunreinigung genauer durchgeführt werden.

Beispielsweise kann ein Verunreinigungsprofil im Hinblick auf häufig vorkommende Zusammensetzungen von Verunreinigungen erstellt werden. Für die Ausgabe von mindestens einem Parameter einer Reinigungsstrategie können auch insbesondere die Reinigungsmittelart und der Reinigungsvorrichtungstyp in einem Verunreinigungsprofil berücksichtigt werden.

Denkbar ist es ebenfalls, dass eine Information über die Effektivität der Reinigungsstrategie in das Verunreinigungsprofil aufgenommen wird. Beispielsweise kann nach einem Reinigungsvorgang erneut eine Intensitätsinformation ermittelt werden, um die Effektivität der Reinigungsstrategie zu ermitteln. Damit können zukünftige Reinigungsstrategien über das Verunreinigungsprofil weiter optimiert werden.

Ebenso kann der Benutzer nach der Reinigung eine Bewertung der mindestens einen Ausgangsgröße, beispielsweise eine Bewertung der Effektivität der Reinigungsstrategie vornehmen, welche in das Verunreinigungsprofil eingeht. Damit kann eine persönliche Anpassung der Ermittlung der Ausgangsgröße, insbesondere der Reinigungsstrategie erreicht werden.

Ebenfalls ist es möglich, dass das mehrmalige Erhalten und/oder Ermitteln der Intensitätsinformation bzw. der mindestens einen Ausgangsgröße für ein maschinelles Lernen genutzt wird. So kann das Verunreinigungsprofil beispielsweise zumindest teilweise basierend auf maschinellem Lernen bestimmt werden. Unter einem maschinellen Lernen wird verstanden, dass ein künstliches System (zum Beispiel eine Vorrichtung gemäß dem zweiten Aspekt oder ein System gemäß dem dritten Aspekt) aus Beispielen lernt und diese nach Beendigung der Lernphase verallgemeinern kann. Das heißt, es werden nicht einfach die Beispiele auswendig gelernt, sondern es werden Muster und Gesetzmäßigkeiten in den Lerndaten erkannt. Hierzu können unterschiedliche Ansätze verfolgt werden. Beispielsweise kann ein überwachtes Lernen, ein teilüberwachtes Lernen, ein unüberwachtes Lernen, ein bestärktes Lernen und/oder ein aktives Lernen eingesetzt werden, insbesondere in Verbindung mit *deep* /eam/ng-Verfahren. Ein überwachtes Lernen kann beispielsweise mittels eines künstlichen neuronalen Netzes (etwa einem rekurrenten neuronalen Netz) oder mittels einer Support Vector Machine erfolgen. Auch ein unüberwachtes Lernen kann beispielsweise mittels eines künstlichen neuronales Netzes (beispielsweis eines Autoencoders) erfolgen. Als Lerndaten dienen dann beispielsweise insbesondere die mehrmalig erhaltenen und/oder ermittelten Intensitätsinformationen bzw. der mindestens einen Ausgangsgrößen.

Alternativ oder zusätzlich ist denkbar, dass die erhaltenen und/oder ermittelten Intensitätsinformationen bzw. mindestens einen Ausgangsgrößen mit weiteren Informationen assoziiert werden, beispielsweise mit der Anzahl und/oder des jeweiligen Alters der Personen eines Haushalts zur Erstellung eines persönlichen Verunreinigungsprofils oder beispielsweise mit der Jahreszeit zur Erstellung eines jahreszeitlichen Verunreinigungsprofils.

Insbesondere kann das Verunreinigungsprofil auch von weiteren Verunreinigungsprofilen anderer Personen beeinflusst werden. Beispielsweise können Präferenzen und/oder Vergleichswerte mit denen anderer Nutzer abgeglichen werden bzw. als Vorschlag eingebracht werden. Im Rahmen eines solchen Crowdsourcing kann die Auswertung der Intensitätsinformation weiter optimiert werden.

Durch diese Maßnahmen kann die Zuverlässigkeit der Ermittlung der mindestens einen Ausgangsgröße und insbesondere der Reinigungsstrategie erhöht werden.

In einer weiteren Ausgestaltung des Verfahrens ist mindestens eine der Vorrichtungen zur Durchführung des Verfahrens ein mobiles Gerät. Insbesondere kann eine Kommunikation über ein Kommunikationssystem zwischen einem mobilen Gerät, beispielsweise einem Smartphone, Laptop, Tablet, Wearable, Smartwatch, Smart-Stift oder einer Kamera, und mindestens einer weiteren Vorrichtung vorgenommen werden, beispielsweise einer Reinigungsvorrichtung und/oder einem optischen Sensor. Eine der Vorrichtungen kann auch ein Reinigungsroboter sein. Gemäß einer Ausgestaltung umfasst die Vorrichtung gemäß dem zweiten Aspekt eine Kommunikationsschnittstelle. Beispielsweise ist die Kommunikationsschnittstelle für eine drahtgebundene oder drahtlose Kommunikation eingerichtet. Beispielsweise ist die Kommunikationsschnittstelle eine Netzwerkschnittstelle. Die Kommunikationsschnittstelle ist bevorzugt dazu eingerichtet mit einem Kommunikationssystem zu kommunizieren. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Ein Kommunikationssystem kann die Kommunikation mit einem externen Computer umfassen, beispielsweise über eine Internetverbindung.

Insbesondere ist ein optischer Sensor zum Ermitteln der Intensitätsinformation vorgesehen und in ein mobiles Gerät integriert. Damit wird dem Benutzer die Ermittlung der Intensitätsinformation erleichtert. Denkbar ist auch, dass ein optischer Sensor in einer Reinigungsvorrichtung vorgesehen ist und/oder ein mobiles Gerät zu einer Anzeige der mindestens einen Ausgangsgröße verwendet wird.

In einer weiteren Ausgestaltung des Verfahrens ist die Intensitätsinformation repräsentativ für ein hyperspektrales Bild. Unter einer für ein hyperspektrales Bild repräsentativen Intensitätsinformation wird insbesondere verstanden, dass die Intensitätsinformation als Intensitätsverteilung Intensitätswerte in mehreren Kanälen für verschiedene Energieintervalle aufweist, wobei mindestens zwei der Energieintervalle aneinander anschließen oder überlappen. Insbesondere kann ein hyperspektrales Bild von einem multispektralen Bild darin abgegrenzt werden, dass ein multispektrales Bild zwar ebenfalls Intensitätswerte in mehreren Kanälen für verschiedene Energieintervalle aufweist, wobei jedoch die Energieintervalle voneinander beabstandet liegen, d.h. bei einem multispektralen Bild werden Intensitäten von einzelnen, voneinander abgegrenzten Energien wiedergegeben. Dagegen werden bei einem hyperspektralen Bild insbesondere "benachbarte" Intensitätswerte wiedergegeben, indem mindestens zwei der Energieintervalle aneinander anschließen oder überlappen. Ein hyperspektrales Bild kann somit zumindest teilweise ein kontinuierliches Spektrum wiedergeben. Eine Intensitätsinformation repräsentativ für ein hyperspektrales Bild hat insbesondere den Vorteil, dass auch für das Auge nicht sichtbare Informationen, welche indikativ für die Zusammensetzung der Verunreinigung sind, erfasst werden können.

Die Intensitätsinformation kann hierbei Werte in mindestens 20 Kanälen umfassen, wobei jeder Kanal eine Intensität für ein Energieintervall repräsentiert. Werden Werte der Intensitätsinformation in mindestens 20 Kanälen bereitgestellt, kann die Auflösung des Spektralbilds und damit auch die Genauigkeit der Ermittlung der Ausgangsgröße verbessert werden. Insbesondere umfasst die Intensitätsinformation mindestens 20 Kanäle bis 250 Kanäle, womit eine genauere Abhängigkeit der Ausgangsgröße von der Zusammensetzung der Verunreinigung erreicht wird. Mit mindestens 20 Kanälen kann in einer für ein Spektralbild, insbesondere für ein hyperspektrales Bild repräsentativen Intensitätsinformation erreicht werden, dass Energieintervalle repräsentiert werden, welche mit dem menschlichen Auge, welches lediglich über drei Kanäle im sichtbaren Bereich verfügt, nicht aufgelöst werden können.

Ist gemäß einer weiteren Ausgestaltung des Verfahrens die Intensitätsinformation repräsentativ für spektrale Anteile eines Spektralbilds, wobei mindestens einer der spektralen Anteile außerhalb des sichtbaren Energiebereichs liegt, kann die Zusammensetzung der Verunreinigung mit erhöhter Genauigkeit in die Ermittlung der Ausgangsgröße einfließen. Dadurch, dass nicht sichtbare spektrale Anteile berücksichtigt werden, können auch verschiedene Zusammensetzungen von Verunreinigungen identifiziert werden, obwohl die Verunreinigungen für das Auge nicht zu unterscheiden sind.

Insbesondere ist die Intensitätsinformation repräsentativ für spektrale Anteile eines Spektralbilds im ultravioletten Energiebereich. Ebenfalls können spektrale Anteile im infraroten Energiebereich berücksichtigt werden. Die Intensitätsinformation ist insbesondere repräsentativ für spektrale Anteile eines Spektralbilds vom infraroten Energiebereich bis zum ultravioletten Energiebereich, beispielsweise zumindest für spektrale Anteile eines Spektralbilds mit Wellenlängen von 1400 nm bis 315 nm, bevorzugt für Wellenlängen von 3000 nm bis 280 nm, weiter bevorzugt für Wellenlängen von 5000 nm bis 200 nm.

Die Intensitätsinformation kann repräsentativ für einen einzelnen Bildpunkt des Spektralbilds sein. Insbesondere ist die Intensitätsinformation jedoch in einer Ausgestaltung des Verfahrens repräsentativ für räumlich aufgelöste Anteile eines Spektralbilds. Ein räumlich aufgelöstes Intensitätsmuster umfasst die Information über die Intensität der Strahlung an zumindest zwei Positionen im Raum. Das räumlich aufgelöste Intensitätsmuster kann beispielsweise durch einen beweglichen optischen Sensor gemessen werden, wobei die Position des optischen Sensors variiert wird und an jeder Position eine Intensität gemessen wird. Bevorzugt ist jedoch die Verwendung eines optischen Sensors mit mehreren räumlich beabstandeten Sensorelementen, beispielsweise Pixel, wobei über die Intensitätsinformation in den verschiedenen Pixeln eine räumlich aufgelöste Intensitätsinformation erhalten werden kann.

Denkbar ist hierbei eine eindimensionale, beispielsweise lineare Auflösung. In einer Ausgestaltung des Verfahrens wird jedoch eine zweidimensionale räumliche Auflösung vorgenommen. Insbesondere wird die räumliche Auflösung über eine flächige Anordnung von Sensorelementen bzw. mindestens ein Sensorfeld, beispielsweise Pixeln vorgenommen.

In einer Ausgestaltung des Verfahrens bzw. der Vorrichtung wird die Ermittlung der Intensitätsinformation repräsentativ für räumlich aufgelöste Anteile eines Spektralbilds über eine integrierte Kamera eines mobilen Geräts vorgenommen, insbesondere über eine hyperspektrale Kamera, welche dafür eingerichtet ist, eine für ein hyperspektrales Bild repräsentative Intensitätsinformation zu ermitteln.

In einer alternativen oder zusätzlichen Ausgestaltung kann eine Ermittlung der Intensitätsinformation über einen Sensor vorgenommen werden, wobei der Sensor an einer Reinigungsvorrichtung angeordnet ist. Beispielsweise ist der Sensor zumindest teilweise an dem äußeren Gehäuse einer Reinigungsvorrichtung und außerhalb eines Reinigungsbehälters, in welchem eine Reinigung durchgeführt werden kann, angeordnet. Der Benutzer hat dadurch stets Zugang zu dem Sensor, auch wenn die Reinigungsvorrichtung in Betrieb ist oder ausgeschaltet ist. Somit kann ein Verfahren gemäß dem ersten Aspekt jederzeit vorgenommen werden. Der Sensor kann dabei an der Reinigungsvorrichtung fixiert sein, beispielsweise über Befestigungsmittel wie eine Verschraubung und/oder Verklebung. Ebenso kann der Sensor auch über Positionierungsmittel frei positionierbar an der Reinigungsvorrichtung angeordnet sein, beispielsweise über eine magnetische Halterung. Ein mobiles Gerät wie ein Smart-Stift kann vorgesehen sein, welcher an und/oder in der Behandlungsvorrichtung lösbar angeordnet ist und beispielsweise über ein Kabel und/oder über Funk mit der Behandlungsvorrichtung kommunizieren kann. Ein solches mobiles Gerät kann einen oder mehrere Sensoren umfassen.

Weiter kann der Sensor zumindest teilweise im Inneren der Reinigungsvorrichtung, insbesondere im Bereich eines Reinigungsbehälters der Reinigungsvorrichtung, in welchem eine Reinigung durchgeführt werden kann, angeordnet sein. Insbesondere ist der Sensor hierbei an einer dem Benutzer zugänglichen Position angeordnet. Der Sensor kann auch hier an der Reinigungsvorrichtung fixiert sein, beispielsweise über Befestigungsmittel oder über Positionierungsmittel frei positionierbar sein. Der Sensor ist beispielsweise an einer Öffnung des Reinigungsbehälters angeordnet, insbesondere an einer Tür. Bei einer Waschmaschine ist der Sensor beispielsweise an der Ladeluke der Wäschetrommel angeordnet und/oder an der Dichtung der Ladeluke.

Ebenso kann der Sensor frei beweglich im Inneren des Reinigungsbehälters ausgestaltet sein. In einer Ausgestaltung ist eine Ermittlungsvorrichtung vorgesehen, die Ermittlungsvorrichtung umfassend: mindestens ein Sensorelement zur Ermittlung der Intensitätsinformation und optional mindestens ein Beleuchtungsmittel, wobei die Vorrichtung dafür eingerichtet ist, während der Durchführung einer Reinigungsstrategie in einem Reinigungsbehälter einer Reinigungsvorrichtung die Intensitätsinformation bereitzustellen. Beispielsweise ist die Ermittlungsvorrichtung dafür eingerichtet, während eines Waschvorgangs frei beweglich in einer Wäschetrommel einer Waschmaschine angeordnet zu werden. Die Ermittlungsvorrichtung kann eine für die Reinigungsbehandlung entsprechende Form aufweisen und beispielsweise eine abgerundete, insbesondere kugelige Form haben. Die Ermittlungsvorrichtung kann auch eine entsprechende Dichtigkeit und mechanische Beständigkeit aufweisen, so dass eine Waschlösung und auch aggressive Reinigungsmittel die Funktion der Ermittlungsvorrichtung nicht beeinträchtigen. Die Ermittlungsvorrichtung kann somit während eines Reinigungsvorgangs Intensitätsinformationen der Verunreinigung bereitstellen, um die Reinigungsstrategie zu überwachen. Eine Ermittlung der Intensitätsinformation kann sowohl für eine Verunreinigung auf der Oberfläche einer Textilie vorgesehen sein und/oder auch Verunreinigungen wie gelöste Textilbestandteile wie Textilfarbstoffe umfassen, beispielsweise durch eine Untersuchung der Waschlösung. Eine Ermittlung der Intensitätsinformation kann hierbei in Transmission und/oder Reflexion und Emission erfolgen.

Insbesondere wird mindestens ein Sensor, welcher sich zumindest teilweise außerhalb des Reinigungsbehälters befindet, mit mindestens einem Sensor, welcher sich zumindest teilweise innerhalb der Reinigungsvorrichtung bzw. innerhalb des Reinigungsbehälters befindet und welcher insbesondere frei beweglich ist, kombiniert. Mehrere Sensoren gleicher oder unterschiedlicher Bauart können vorgesehen sein. Damit wird die Genauigkeit der Ermittlung der mindestens einen Ausgangsgröße verbessert, da die Sensoren mit unterschiedlichen Positionen entsprechende Intensitätsinformationen bereitstellen können. Insbesondere arbeitet zumindest einer der Sensoren zumindest zeitweise kontinuierlich, so dass zu verschiedenen Zeitpunkten und insbesondere kontinuierlich während einer Reinigungsbehandlung Intensitätsinformationen erhalten werden.

Ebenso kann mindestens ein Sensor an einem Teil einer Reinigungsmittelverpackung angeordnet sein und beispielsweise in eine Verschlusskappe integriert oder auf einer Verschlussklappe anzuordnen sein, insbesondere durch ein Aufstecken. Damit ist der Sensor frei und unabhängig von einer Reinigungsvorrichtung beweglich und kann vom Benutzer auf einfache Weise an einer Verunreinigung einer Textilie eingesetzt werden. Ebenso kann der Sensor dann im Zusammenhang mit einer Vielzahl von verschiedenen Reinigungsvorrichtungen verwendet werden.

Gemäß einer Ausgestaltung des Verfahrens gemäß dem ersten Aspekt umfasst das Verfahren weiterhin ein Unterziehen der Intensitätsinformation einem Bearbeitungsalgorithmus.

Hierdurch kann zum einen eine bessere Unterscheidung von verschiedenen Zusammensetzungen der Verunreinigung der Textilie erreicht werden. Beispielsweise wird die Intensitätsinformation einem Konvertierungsalgorithmus unterzogen. Beispielsweise kann eine Konvertierung der ermittelten Intensitätsinformation (beispielsweise einer oder mehrerer Bildinformationen) von einem ersten Darstellungsraum in einen zweiten Darstellungsraum erfolgen, beispielsweise von einem ersten Farbraum zu einem zweiten Farbraum. Beispiele für Farbräume sind etwa ein RGB-Farbraum oder ein L*a*b*-Farbraum. Beispielsweise erfolgt eine Konvertierung der ermittelten Bildinformation von einem RGB-Farbraum in einen L*a*b*-Farbraum.

Unter einem RGB-Farbraum ist ein additiver Farbraum, der Farbwahrnehmungen durch das additive Mischen dreier Grundfarben (Rot, Grün und Blau) nachbildet, zu verstehen. Ein Beispiel für einen L*a*b*-Farbraum ist beispielsweise der CIELAB-Farbraum, der in der EN ISO 11664-4 "Colorimetry -- Part 4: CIE 1976 L*a*b* Colour space" (CIE 1976 Farbraum) genormt ist. Vorteilhaft ist hier, dass Farben unabhängig von der Art ihrer Erzeugung oder Wiedergabetechnik so definiert werden, wie sie von einem Normalbeobachter bei einer Standard-Lichtbedingung wahrgenommen werden (Geräteunabhängigkeit und Wahrnehmungsbezogenheit).

Zur Ermittlung der mindestens einen Ausgangsgröße kann insbesondere eine Auswertung von Farbdifferenzen zwischen Pixeln einer Bildinformation vorgenommen werden. Hierzu können insbesondere auf der Farbdifferenz bzw. dem Farbabstand Δ*E* basierende Methoden herangezogen werden. Insbesondere wird die Berechnung von Δ*E* im CIELAB-Farbraum vorgenommen. Gleichfalls kann zur Ermittlung der mindestens einen Ausgangsgröße die Helligkeit in der Intensitätsinformation herangezogen werden.

Insbesondere umfasst die Ermittlung des Ausgangsparameters eine Korrelation der Intensitätsinformation. Insbesondere können Anteile der Intensitätsinformation miteinander korreliert werden, Hierbei können Anteile repräsentativ für eine Bildinformation, repräsentativ für spektrale Anteile im sichtbaren Bereich mit anderen Energiebereichen, insbesondere umfassend den (nahen) Infrarotbereich miteinander korreliert werden. Beispielsweise wird über die Bildinformation die Form der Verunreinigung und über die spektralen Anteile die Zusammensetzung der Verunreinigung ermittelt und miteinander abgeglichen.

Gemäß dem zweiten Aspekt der Erfindung wird auch eine Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Einzelne Verfahrensschritte des Verfahrens gemäß dem ersten Aspekt (beispielsweise das Erhalten oder Ermitteln einer Intensitätsinformation, das Ermitteln der mindestens einen Ausgangsgröße und/oder das Bestimmen eines Verunreinigungsprofils) können hierbei mit einer Sensorvorrichtung, welche auch mindestens ein Sensorelement aufweist, durchgeführt werden. Ebenso können einzelne Verfahrensschritte (beispielsweise das Erhalten oder Ermitteln einer Intensitätsinformation, das Ermitteln der mindestens einen Ausgangsgröße und/oder das Bestimmen eines Verunreinigungsprofils), welche beispielswiese nicht unbedingt mit der Sensoreinrichtung durchgeführt werden müssen, von einer weiteren Vorrichtung vorgenommen werden, welche insbesondere über ein Kommunikationssystem mit der Vorrichtung, welche mindestens ein Sensorelement aufweist, in Verbindung steht.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß einem dritten Aspekt der Erfindung wird auch ein System beschrieben, umfassend eine der oben genannten Vorrichtungen, ein mobiles Gerät und eine Reinigungsvorrichtung, welche zusammen ein Verfahren gemäß dem ersten Aspekt durchführen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: ein Ablaufdiagramm eines Ausführungsbeispiels eines Verfahrens;
- Fig. 2a-c: eine schematische Darstellung eines Spektralbilds bzw. von hierfür repräsentativen Intensitätsinformationen;
- Fig. 3: eine schematische Darstellung eines Ausführungsbeispiels einer Vorrichtung;
- Fig. 4: ein Blockdiagramm eines Ausführungsbeispiels einer Vorrichtung; und
- Fig. 5: unterschiedliche Ausführungsbeispiele eines Speichermediums.

Detaillierte Beschreibung einiger beispielhafter Ausführungsformen der Erfindung

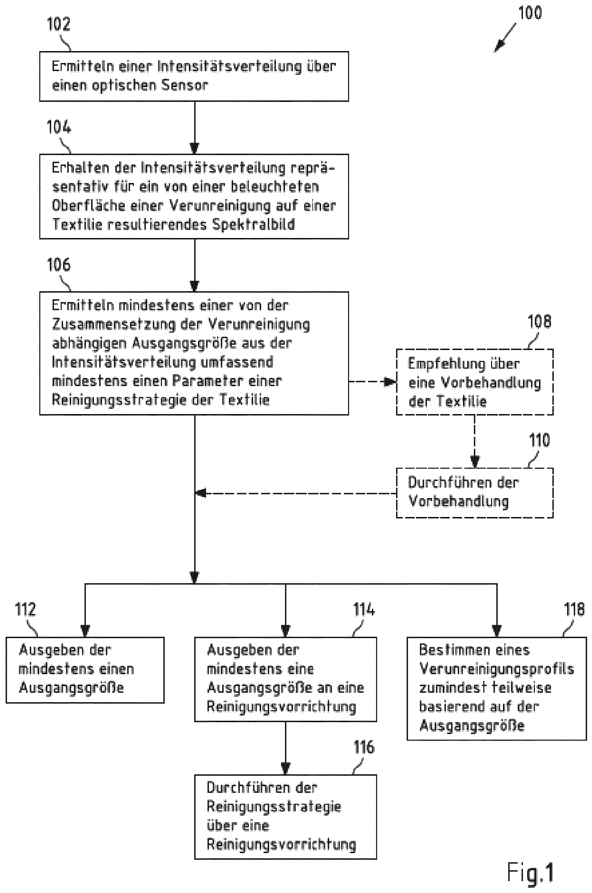

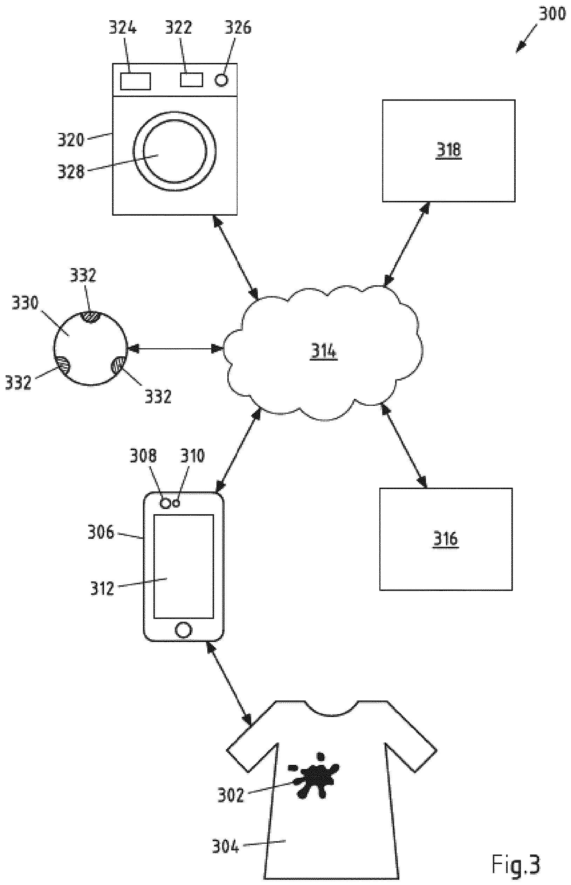

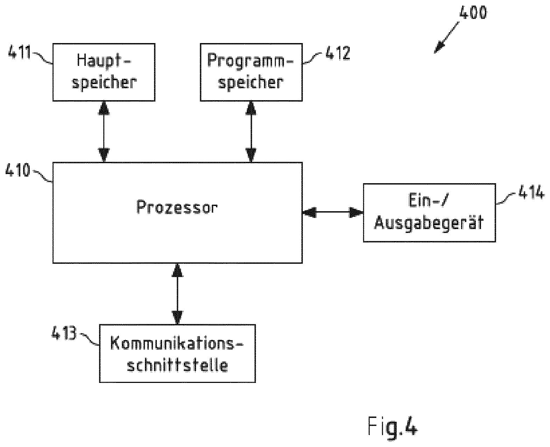

Fig.1 zeigt ein Ablaufdiagramm 100 eines Ausführungsbeispiels eines Verfahrens gemäß dem ersten Aspekt, welches durch eine Vorrichtung, beispielsweise eine der Vorrichtungen aus Fig. 3 und 4 durchgeführt wird.

In der Aktion 102 wird eine Intensitätsinformation in Form einer Intensitätsverteilung über einen optischen Sensor ermittelt, wobei die Intensitätsverteilung repräsentativ für ein von einer beleuchteten Oberfläche einer Verunreinigung auf einer Textilie resultierendes Spektralbild ist. Die Intensitätsverteilung ist insbesondere repräsentativ für ein hyperspektrales Bild und umfasst Intensitätswerte in mehreren Kanälen für verschiedene Energieintervalle, wobei mindestens zwei der Energieintervalle aneinander anschließen oder überlappen.

Diese Intensitätsverteilung wird in Aktion 104 erhalten. Da die Intensitätsverteilung von der chemischen Zusammensetzung der Verunreinigung der Textilie abhängig ist, kann in Aktion 106 mindestens eine von der Zusammensetzung der Verunreinigung abhängige Ausgangsgröße aus der Intensitätsverteilung ermittelt werden. Hierbei wird auf Grundlage der chemischen Zusammensetzung der Verunreinigung mindestens ein Parameter einer Reinigungsstrategie der Textilie ermittelt, wobei die Reinigungsstrategie eine Empfehlung zu einer optimalen Reinigung der Textilie von der Verunreinigung darstellt.

Zusätzlich kann optional mit Aktion 108 eine Empfehlung über eine Vorbehandlung der Textilie erfolgen. Bei bestimmten Zusammensetzungen der Verunreinigung kann eine entsprechende Vorbehandlung benötigt werden, welche beispielsweise von einer weiteren Vorrichtung in Aktion 110 durchgeführt wird.

In Aktion 112 wird eine Ausgabe der mindestens einen Ausgangsgröße veranlasst, beispielsweise eine Ausgabe auf einem Anzeigeelement, wobei dem Benutzer insbesondere Hinweise auf die Zusammensetzung der Verunreinigung und mindestens einen Parameter der Reinigungsstrategie angezeigt werden. Der Benutzer kann auf Grundlage der angezeigten Information bzw. Empfehlung eine Reinigung der Textilie durchführen.

Zudem oder alternativ kann in Aktion 114 eine Ausgabe der der mindestens einen Ausgangsgröße, insbesondere des mindestens einen Parameters der Reinigungsstrategie, an eine Reinigungsvorrichtung erfolgen. Die ausgegebenen Parameter der Reinigungsstrategie werden in Aktion 116 zur Durchführung einer Reinigung mittels der Reinigungsvorrichtung verwendet.

Zusätzlich kann in Aktion 118 ein Verunreinigungsprofil bestimmt werden, welches zumindest teilweise auf der Ausgangsgröße basiert. Damit kann die Ermittlung der mindestens einen Ausgangsgröße adaptiv gestaltet werden und sich über das Verunreinigungsprofil den jeweiligen Anforderungen genauer anpassen.

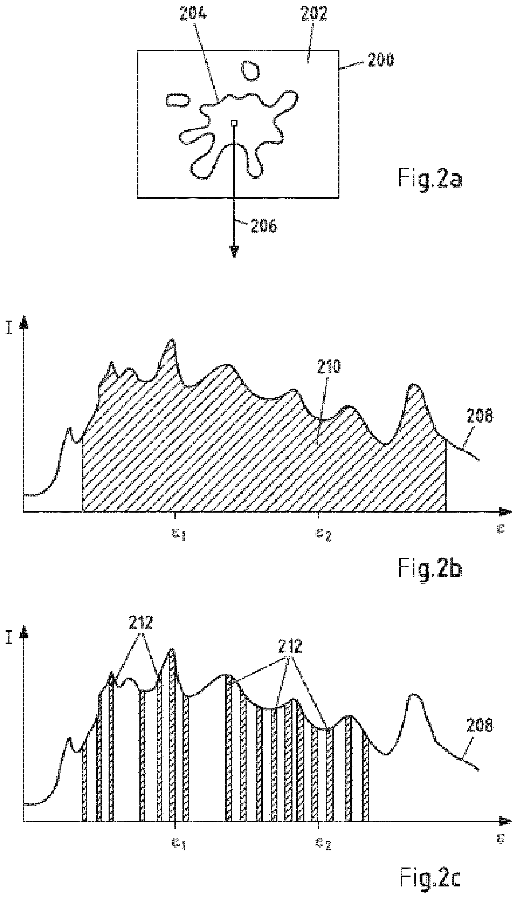

In Fig. 2a ist in einer schematischen Darstellung ein Spektralbild 200 einer Textilie 202 mit einer Verunreinigung 204 gezeigt. Das Spektralbild 200 resultiert insbesondere von der Beleuchtung der Oberfläche der Verunreinigung 204 mit Strahlung, wobei insbesondere durch Reflexion und Emission von der Oberfläche der Verunreinigung 204 Strahlung ausgeht, welche physikalisch gemessen werden kann, insbesondere über einen optischen Sensor. Eine Intensitätsverteilung, welche repräsentativ für die räumliche Auflösung des Spektralbilds 200 ist, kann insbesondere über eine Vielzahl von Sensorelementen, beispielsweise Pixeln, festgehalten werden, wobei die Pixel zweidimensional auf einer Fläche angeordnet sind.

In den Fig. 2b und 2c sind in schematischen Ansichten Intensitätsverteilungen 210, 212 gezeigt, welche repräsentativ für spektrale Anteile des Spektralbilds 200 sind. Für einen begrenzten räumlichen Abschnitt des Spektralbilds 200, dargestellt über den Pfeil 206, ergibt sich das Spektrum 208. Wird das Spektrum 208 über ein optisches Sensorelement, beispielsweise einen Pixel eines optischen Sensors gemessen, kann eine Intensitätsverteilung 210 erhalten werden, wobei die Intensitätsverteilung 210 für das von der beleuchteten Oberfläche der Verunreinigung 204 auf der Textilie 202 resultierende Spektralbild 200 repräsentativ ist. Die Intensitätsverteilung 210 ist in Fig. 2b als gemusterte Fläche dargestellt.

Die Intensitätsverteilung 210 in Fig. 2b ist hierbei repräsentativ für ein hyperspektrales Bild, wobei die Intensitätsverteilung 210 Werte in mindestens 20 Kanälen bis 250 Kanälen umfasst, wobei jeder Kanal eine Intensität für ein Energieintervall repräsentiert. Die Intensitätsverteilung 210 weist Intensitätswerte in Kanälen für Energieintervalle auf, wobei die Energieintervalle aneinander anschließen oder überlappen. Somit ist die Intensitätsverteilung 210 wie in Fig. 2b dargestellt repräsentativ für ein zumindest teilweise kontinuierliches Spektrum.

Zudem ist die Intensitätsverteilung 210 repräsentativ für spektrale Anteile des Spektralbilds 208, welche außerhalb des sichtbaren Energiebereichs liegt. Der sichtbare Energiebereich ist in Fig. 2b über die niedrigste sichtbare Energie ε₁, und die höchste sichtbare Energie ε₂ gekennzeichnet. Die Intensitätsverteilung 210 ist hierbei repräsentativ für spektrale Anteile vom infraroten Energiebereich (Energie ε kleiner als ε₁) bis zum ultravioletten Energiebereich (Energie ε größer als ε₂). Dies hat insbesondere den Vorteil, dass auch für das Auge nicht sichtbare Informationen, welche indikativ für die Zusammensetzung der Verunreinigung sind, über die Intensitätsverteilung 210 festgehalten werden können.

In Fig. 2c ist eine Intensitätsverteilung 212 repräsentativ für ein multispektrales Bild in einer schematischen Ansicht gezeigt. Die Intensitätsverteilung 212 umfasst wie die Intensitätsverteilung 210 ebenfalls Intensitätswerte in mehreren Kanälen für verschiedene Energieintervalle. Jedoch liegen die Energieintervalle voneinander beabstandet und es werden Intensitäten von einzelnen, voneinander abgegrenzten Energien bzw. Linien wiedergegeben. Somit ist die Intensitätsverteilung 212 insbesondere nicht repräsentativ für ein kontinuierliches Spektrum. Auch die Intensitätsverteilung 212 ist repräsentativ für spektrale Anteile vom infraroten Energiebereich bis zum ultravioletten Energiebereich, so dass auch hiermit für das Auge nicht sichtbare Informationen erfasst werden können.

Fig. 3 zeigt ein Ausführungsbeispiel einer Vorrichtung 300 gemäß dem zweiten Aspekt bzw. ein System gemäß dem dritten Aspekt. Die Vorrichtung 300 ist dazu eingerichtet bzw. umfasst entsprechende Mittel, ein Verfahren gemäß dem ersten Aspekt durchzuführen und/oder zu steuern.

Insbesondere ermöglicht die Vorrichtung 300 die Identifikation einer Zusammensetzung einer Verunreinigung 302 auf einer Textilie 304 und/oder gibt eine Empfehlung für eine Reinigungsstrategie zur Entfernung der Verunreinigung 302 von der Textilie 304.

Mit einem mobilen Gerät, hier einem Smartphone 306, wird zunächst eine Intensitätsverteilung repräsentativ für ein von der beleuchteten Oberfläche der Verunreinigung 302 resultierendes Spektralbild ermittelt. Hierfür wird insbesondere ein optischer Sensor 308 verwendet, welcher beispielsweise eine hyperspektrale Kamera umfassen kann. Zusätzlich ist eine Strahlungsquelle 310 vorgesehen, welche zur Beleuchtung der Oberfläche der Verunreinigung 302 dient. Das Smartphone 306 verfügt zudem über ein Anzeigeelement 312.

Die ermittelte Intensitätsverteilung wird von einem Kommunikationssystem 314 erhalten. In Verbindung mit dem Kommunikationssystem 314 steht eine Ermittlungsvorrichtung 316, welche dafür eingerichtet ist, aus der Intensitätsverteilung von der Zusammensetzung der Verunreinigung 302 abhängige Ausgangsgrößen zu ermitteln.

Die Ermittlung der Ausgangsgrößen umfasst hierbei einen Vergleich der Intensitätsverteilung mit Vergleichswerten. Die Vergleichswerte sind in einer Datenbank 318 hinterlegt, welche ebenfalls in Kommunikation zu dem Kommunikationssystem 314 steht. Die Vergleichswerte der Datenbank 318 enthalten insbesondere Intensitätsverteilungen von typischen im Haushalt auftretenden Verunreinigungen. Weiter enthält die Datenbank 318 den Vergleichswerten zugeordnete Daten in Form einer chemischen Zusammensetzung und Parametern in Bezug auf eine für die entsprechende Zusammensetzung optimale, zu empfehlende Reinigungsstrategie.

Die Ausgangsgrößen umfassen Parameter einer solchen Reinigungsstrategie, wobei die Parameter eine Reinigungsmittelart, eine Reinigungsmittelmenge, eine Reinigungstemperatur, einen Reinigungsvorrichtungstyp und Einstellungen einer Reinigungsvorrichtung 320 angeben. Diese Ausgangsgrößen werden auf dem Anzeigeelement 312 des Smartphones 306 angezeigt und somit dem Benutzer zur Verfügung gestellt. Dem Benutzer wird folglich eine Empfehlung über eine für die spezifische Verunreinigung 302 optimale Reinigungsstrategie zur Verfügung gestellt.

Die Reinigungsvorrichtung 320 steht ebenfalls in Kommunikation mit dem Kommunikationssystem 314, wodurch die Ausgangsgrößen an die Reinigungsvorrichtung 320 ausgegeben werden. Die Reinigungsvorrichtung 320 weist ein Anzeigeelement 322 auf, welches insbesondere die Ausgangsgrößen anzeigen kann. Weiter weist die Reinigungsvorrichtung 320 eine Dosierungsvorrichtung 324 für Reinigungsmittel auf. Die Dosierungsvorrichtung 324 kann hierbei ein Reinigungsmittel entsprechend den Parametern der Reinigungsstrategie in Bezug auf die Reinigungsmittelart und/oder die Reinigungsmittelmenge bereitstellen oder prüfen, ob das Reinigungsmittel entsprechend der empfohlenen Reinigungsstrategie in die Dosierungsvorrichtung 324 eingefüllt wurde.

Weiter weist die Reinigungsvorrichtung 320 ein Bedienelement 326 auf, welches die Steuerung der Reinigungsvorrichtung 320 durch einen Benutzer erlaubt. Die Reinigungsvorrichtung 320 übernimmt hierbei die Parameter der Reinigungsstrategie als Voreinstellung. Der Benutzer hat dann die Wahl, der Empfehlung der Reinigungsstrategie zu folgen und die Reinigungsvorrichtung 320 einfach über das Bedienelement 326 zu starten oder eine eigene, manuelle Einstellung der Reinigungsvorrichtung 320 über das Bedienelement 326 durchzuführen. Die Reinigung wird in einem Reinigungsbehälter 328, hier einer Wäschetrommel, durchgeführt.

Weiter ist in Fig. 3 eine Ermittlungsvorrichtung 330 gezeigt. Die Ermittlungsvorrichtung 330 umfasst Sensorelemente 332 und optional mindestens ein Beleuchtungsmittel (nicht gezeigt). Die Ermittlungsvorrichtung weist eine kugelige Form auf und ist dafür eingerichtet, während der Durchführung einer Reinigung in dem Reinigungsbehälter 328 angeordnet zu werden. Die Ermittlungsvorrichtung 330 ist hierbei frei beweglich und gegen eine Einwirkung der Waschlösung in dem Reinigungsbehälter 328 beständig. Die Ermittlungsvorrichtung 330 kann somit während eines Reinigungsvorgangs Intensitätsverteilungen der Verunreinigung 302 bereitstellen, um die Reinigungsstrategie zu überwachen. Die Ermittlungsvorrichtung 330 kann auch Intensitätsverteilungen löslicher, nicht fixierte Textilfarbstoffe in der Waschlösung ermitteln. Damit kann ein Herauslösen der entsprechenden Textilfarbstoffe aus der Textilie 304 überwacht werden.

Fig. 4 zeigt ein Blockdiagramm eines Ausführungsbeispiels einer Vorrichtung 400, welche insbesondere ein beispielhaftes Verfahren gemäß dem ersten Aspekt ausführen kann. Die Vorrichtung 400 ist beispielsweise eine Vorrichtung gemäß dem zweiten oder ein System gemäß dem dritten Aspekt.

Die Vorrichtung 400 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 410 der Vorrichtung 400 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 410 führt Programmanweisungen aus, die in Programmspeicher 412 gespeichert sind, und speichert beispielsweise Zwischenergebnisse oder ähnliches in Arbeits- oder Hauptspeicher 411. Zum Beispiel ist Programmspeicher 412 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 411 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 412 ist vorzugsweise ein lokaler mit der Vorrichtung 400 fest verbundener Datenträger. Mit der Vorrichtung 400 fest verbundene Datenträger sind beispielsweise Festplatten, die in die Vorrichtung 400 eingebaut sind. Alternativ kann der Datenträger beispielsweise auch ein mit der Vorrichtung 400 trennbar verbindbarer Datenträger sein wie ein Speicher-Stick, ein Wechseldatenträger, eine tragbare Festplatte, eine CD, eine DVD und/oder eine Diskette.

Programmspeicher 412 enthält beispielsweise das Betriebssystem von der Vorrichtung 400, das beim Starten der Vorrichtung 400 zumindest teilweise in Hauptspeicher 411 geladen und vom Prozessor 410 ausgeführt wird. Insbesondere wird beim Starten von Vorrichtung 400 zumindest ein Teil des Kerns des Betriebssystems in den Hauptspeicher 411 geladen und von Prozessor 410 ausgeführt. Das Betriebssystem von Vorrichtung 400 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 400 zur Datenverarbeitung. Es verwaltet beispielsweise Betriebsmittel wie Hauptspeicher 411 und Programmspeicher 412, Netzwerkschnittstelle 413, Ein- und Ausgabegerät 414, stellt unter anderem durch Programmierschnittstellen anderen Programmen grundlegende Funktionen zur Verfügung und steuert die Ausführung von Programmen.

Prozessor 410 steuert die Kommunikationsschnittstelle 413, welche beispielsweise eine Netzwerkschnittstelle sein kann und als Netzwerkkarte, Netzwerkmodul und/oder Modem ausgebildet sein kann. Die Kommunikationsschnittstelle 413 ist insbesondere dazu eingerichtet, eine Verbindung der Vorrichtung 400 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 413 kann beispielsweise Daten (über das Kommunikationssystem) empfangen und an Prozessor 410 weiterleiten und/oder Daten von Prozessor 410 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 410 zumindest ein Ein-/Ausgabegerät 414 steuern. Ein-/Ausgabegerät 414 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 414 kann beispielsweise Eingaben eines Benutzers aufnehmen und an Prozessor 410 weiterleiten und/oder Informationen für den Benutzer von Prozessor 410 empfangen und ausgeben.

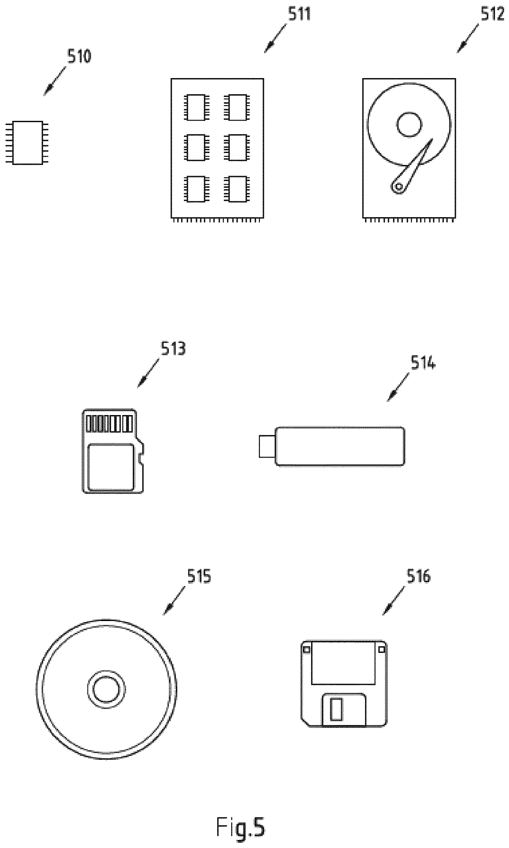

Fig.5 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 410 der Fig. 4) sein, beispielsweise ein (nicht-flüchtiger oder flüchtiger) Programmspeicher des Prozessors oder ein Teil davon (wie Programmspeicher 412 in Fig. 4). Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren umfassend:
- Erhalten einer Intensitätsinformation (210, 212) repräsentativ für ein von einer Verunreinigung (204, 302) einer Textilie (202, 304) resultierendes Spektralbild (208);
- Ermitteln mindestens einer von der Zusammensetzung der Verunreinigung (204, 302) abhängigen Ausgangsgröße aus der Intensitätsinformation (210, 212); und
- Ausgeben oder Auslösen eines Ausgebens der mindestens einen Ausgangsgröße,
wobei die mindestens eine Ausgangsgröße mindestens einen Parameter einer Reinigungsstrategie der Textilie zur Entfernung der Verunreinigung von der Textilie umfasst;
- Durchführen der Reinigungsstrategie über eine Reinigungsvorrichtung (320),
**dadurch gekennzeichnet, dass**
die Intensitätsinformation während einer Reinigung erhalten wird, wobei die Reinigung dynamisch durchgeführt wird indem die Reinigungsvorrichtung (320) sich während der Reinigung an die ermittelte mindestens eine Ausgangsgröße anpasst.

2. Verfahren nach Anspruch 1, wobei die Intensitätsinformation (210, 212) repräsentativ für ein von einer beleuchteten Oberfläche der Verunreinigung (204, 302) auf einer Textilie (202, 304) resultierendes Spektralbild (208) ist.

3. Verfahren nach Anspruch 1, wobei der mindestens eine Parameter der Reinigungsstrategie eine Reinigungsmittelart, eine Reinigungsmittelmenge, eine Reinigungstemperatur, einen Reinigungsvorrichtungstyp, Einstellungen einer Reinigungsvorrichtung (320) oder Kombinationen hiervon repräsentiert,.

4. Verfahren nach einem der Ansprüche 1 bis 3, wobei die Ermittlung der mindestens einen Ausgangsgröße einen Vergleich der Intensitätsinformation (210, 212) mit Vergleichswerten umfasst.

5. Verfahren nach einem der Ansprüche 1 bis 4, das Verfahren weiterhin umfassend:
- Ermitteln der Intensitätsinformation (210, 212) über einen optischen Sensor (308).

6. Verfahren nach einem der Ansprüche 1 bis 5, das Verfahren weiterhin umfassend:
- Bestimmen eines Verunreinigungsprofils zumindest teilweise basierend auf der Ausgangsgröße, insbesondere basierend auf einer Mehrzahl von ermittelten Ausgangsgrößen,
- wobei die Ermittlung der mindestens einen Ausgangsgröße zukünftig zumindest teilweise auf dem Verunreinigungsprofil basiert.

7. Verfahren nach einem der Ansprüche 1 bis 6, wobei die Intensitätsinformation (210) repräsentativ für ein hyperspektrales Bild ist.

8. Verfahren nach einem der Ansprüche 1 bis 7, wobei die Intensitätsinformation (210, 212) Werte in mindestens 20 Kanälen umfasst, wobei jeder Kanal eine Intensität für ein Energieintervall repräsentiert.

9. Verfahren nach einem der Ansprüche 1 bis 8, wobei die Intensitätsinformation (210, 212) repräsentativ für spektrale Anteile eines Spektralbilds (200) ist, wobei mindestens einer der spektralen Anteile außerhalb des sichtbaren Energiebereichs liegt.

10. Verfahren nach Anspruch 9, wobei die Intensitätsinformation (210, 212) repräsentativ für spektrale Anteile eines Spektralbilds (200) vom infraroten Energiebereich bis zum ultravioletten Energiebereich ist.

11. Verfahren nach einem der Ansprüche 1 bis 10, wobei die Intensitätsinformation (210, 212) repräsentativ für räumlich aufgelöste Anteile eines Spektralbilds (200) ist.

12. Vorrichtung, welche dazu eingerichtet ist oder entsprechende Mittel umfasst, ein Verfahren nach einem der Ansprüche 1 bis 11 durchzuführen und/oder zu steuern, wobei die Mittel eine Sensorvorrichtung, einen Prozessor und einen Speicher mit Computerprogrammcode umfassen.

13. System, umfassend:
- eine Vorrichtung nach Anspruch 12, ein mobiles Gerät (306) und eine Reinigungsvorrichtung (320), welche zusammen ein Verfahren nach einem der Ansprüche 1 bis 11 durchführen.

## Claims

1. A method comprising:
- obtaining intensity information (210, 212) representative of a spectral image (208) resulting from soiling (204, 302) of a textile (202, 304);
- determining at least one output variable, which is dependent on the composition of the soiling (204, 302), on the basis of the intensity information (210, 212); and
- outputting or triggering the output of the at least one output variable,
the at least one output variable comprising at least one parameter of a cleaning strategy for the textile to remove the soiling from the textile;
- carrying out the cleaning strategy by means of a cleaning device (320),
**characterized in that**
the intensity information is obtained during a cleaning process, the cleaning process being carried out dynamically by the cleaning device (320) adapting to the determined at least one output variable during the cleaning process.

2. The method according to claim 1, wherein the intensity information (210, 212) is representative of a spectral image (208) resulting from an illuminated surface of the soiling (204, 302) on a textile (202, 304).

3. The method according to claim 1, wherein the at least one parameter of the cleaning strategy constitutes a type of cleaning agent, an amount of cleaning agent, a cleaning temperature, a type of cleaning device, settings of a cleaning device (320) or combinations thereof.

4. The method according to one of claims 1 to 3, wherein determining the at least one output variable comprises comparing the intensity information (210, 212) with comparative values.

5. The method according to one of claims 1 to 4, the method further comprising:
- determining the intensity information (210, 212) by means of an optical sensor (308).

6. The method according to one of claims 1 to 5, the method further comprising:
- determining a soiling profile at least partly on the basis of the output variable, in particular on the basis of a plurality of determined output variables,
- wherein determining the at least one output variable is based at least partly on the soiling profile.

7. The method according to one of claims 1 to 6, wherein the intensity information (210) is representative of a hyperspectral image.

8. The method according to one of claims 1 to 7, wherein the intensity information (210, 212) comprises values in at least 20 channels, wherein each channel represents an intensity for one energy interval.

9. The method according to one of claims 1 to 8, wherein the intensity information (210, 212) is representative of spectral components of a spectral image (200), wherein at least one of the spectral components is outside the visible energy range.

10. The method according to claim 9, wherein the intensity information (210, 212) is representative of spectral components of a spectral image (200) from the infrared energy range as far as the ultraviolet energy range.

11. The method according to one of claims 1 to 10, wherein the intensity information (210, 212) is representative of spatially resolved components of a spectral image (200).

12. A device which is designed or comprises corresponding means for carrying out and/or controlling a method according to one of claims 1 to 11, wherein the means comprise a sensor device, a processor and a memory comprising computer program code.

13. A system comprising:
- a device according to claim 12, a mobile device (306) and a cleaning device (320), which together carry out a method according to one of claims 1 to 11.

## Revendications

1. Procédé, comprenant :
- l'obtention d'informations d'intensité (210, 212) représentatives pour une image spectrale (208) résultant de la contamination (204, 302) d'un textile (202, 304) ;
- la détermination d'au moins une grandeur de sortie dépendant de la composition de la contamination (204, 302) à partir des informations d'intensité (210, 212) ; et
- la sortie ou le déclenchement d'une sortie de l'au moins une grandeur de sortie,
l'au moins une grandeur de sortie comprenant au moins un paramètre d'une stratégie de nettoyage du textile pour l'élimination de la contamination du textile ;
- l'exécution de la stratégie de nettoyage par un dispositif de nettoyage (320),
**caractérisé en ce que**
les informations d'intensité sont obtenues durant un nettoyage, le nettoyage étant exécuté de manière dynamique, le dispositif de nettoyage (320) s'adaptant durant le nettoyage à l'au moins une grandeur de sortie déterminée.

2. Procédé selon la revendication 1, les informations d'intensité (210, 212) étant représentatives pour une image spectrale (208) résultant de la contamination (204, 302) sur un textile (202, 304).

3. Procédé selon la revendication 1, l'au moins un paramètre de la stratégie de nettoyage représentant un type de détergent, une quantité de détergent, une température de nettoyage, un type de dispositif de nettoyage, des réglages d'un dispositif de nettoyage (320) ou des combinaisons de ceux-ci.

4. Procédé selon l'une des revendications 1 à 3, la détermination de l'au moins une grandeur de sortie comprenant une comparaison des informations d'intensité (210, 212) avec des valeurs de comparaison.

5. Procédé selon l'une des revendications 1 à 4, ledit procédé comprenant en outre :
- la détermination des informations d'intensité (210, 212) à travers un capteur optique (308).

6. Procédé selon l'une des revendications 1 à 5, ledit procédé comprenant en outre :
- la détermination d'un profil de contamination au moins partiellement basé sur la grandeur de sortie, en particulier basé sur une pluralité de grandeurs de sortie déterminées,
- la détermination de l'au moins une grandeur de sortie étant désormais au moins partiellement basée sur le profil de contamination.

7. Procédé selon l'une des revendications 1 à 6, les informations d'intensité (210) étant représentatives pour une image hyperspectrale.

8. Procédé selon l'une des revendications 1 à 7, les informations d'intensité (210, 212) comprenant des valeurs dans au moins 20 canaux, chaque canal représentant une intensité pour un intervalle énergétique.

9. Procédé selon l'une des revendications 1 à 8, les informations d'intensité (210, 212) étant représentatives pour des composantes spectrales d'une image spectrale (200), au moins une des composantes spectrales étant située en dehors de la plage énergétique visible.

10. Procédé selon la revendication 9, les informations d'intensité (210, 212) étant représentatives pour des composantes spectrales d'une image spectrale (200) de la plage énergétique infrarouge jusqu'à la plage énergétique ultraviolette.

11. Procédé selon l'une des revendications 1 à 10, les informations d'intensité (210, 212) étant représentatives pour des composantes résolues dans l'espace d'une image spectrale (200).

12. Dispositif, lequel est configuré ou comprend des moyens pour mettre en oeuvre et/ou commander un procédé selon l'une des revendications 1 à 11, les moyens comprenant un dispositif de capteurs, un processeur et une mémoire comprenant un code de programme informatique.

13. Système, comprenant :
- un dispositif selon la revendication 12, un appareil mobile (306) et un dispositif de nettoyage (320), lesquels exécutent ensemble un procédé selon l'une des revendications 1 à 11.
